# EUROPÄISCHE PATENTSCHRIFT

(11) **EP 3 818 820 B1**
(45) Veröffentlichungstag und Bekanntmachung des Hinweises auf die Patenterteilung: **16.08.2023**
(21) Anmeldenummer: 20205132.2
(22) Anmeldetag: 02.11.2020
(51) Int. Cl.: A01G 9/14, A01G 9/24, A01G 25/09, F16L 11/10, F16L 11/12, F16L 11/08

(54) **VERWENDUNG EINER FLEXIBLEN SCHLAUCHLEITUNG ZUM TRANSPORT EINES FLUIDES**
USE OF A FLEXIBLE HOSE FOR TRANSPORTING A FLUID
UTILISATION D'UN TUYAU FLEXIBLE POUR ACHEMINER UN FLUIDE

(30) Priorität: 06.11.2019 DE 102019129923
(43) Veröffentlichungstag der Anmeldung: 12.05.2021
(73) Patentinhaber: REHAU Industries SE & Co. KG, 95111 Rehau (DE)
(72) Erfinder: Bayreuther, Thomas, 95111 Rehau (DE); Ruckdäschel, Gerhard, 95163 Weißenstadt (DE); Schörner, Georg, 95111 Rehau (DE); Bakker, Hodia Joas, 7944 Meppel (NL)

(56) Entgegenhaltungen:
- EP-A1- 3 115 669
- CN-U- 204 544 900
- DE-U1-202010 017 343
- US-A- 5 397 056
- US-A1- 2016 033 060

## Beschreibung

Die Erfindung betrifft die Verwendung einer flexiblen Schlauchleitung zum Transport eines Fluides gemäß den Merkmalen des Oberbegriffs des Patentanspruchs 1. Eine solche Verwendung ist aus der Druckschrift US 2016/033060 A1 bekannt.

Die Erfindung beschäftigt sich ferner mit dem Anwendungsfall der Bewirtschaftung großer Gewächshäuser. Diese sind heutzutage häufig mehrere hundert Meter lang, so dass an das entsprechende Equipment zu Bewirtschaftung des Gewächshauses besondere Herausforderungen gestellt werden. Sofern beispielsweise das Glasdach des Gewächshauses außenseitig gereinigt werden soll, sind zur Wasserversorgung hierfür sehr lange Schlauchleitungen erforderlich, um die entsprechende Reinigungsapparatur entlang der gesamten Länge des Gewächshauses verfahren zu können. Regelmäßig wird bei diesen Schlauchleitungen gefordert, dass sie über die gesamte Länge des Gewächshauses frei von Kupplungselementen sind. Zum einen wird durch diese Forderung das Auf- und Abwickeln der entsprechenden Schlauchleitungen von Trommeln oder dergleichen erleichtert. Zum anderen wird hierdurch die Gefahr vermieden, dass ein Kupplungselement beim Reinigungsvorgang auf das Glasdach des Gewächshauses aufschlagen und hierdurch beschädigen kann. Wenn nun die Schlauchleitung als Zulaufleitung für eine Glasdach-Waschanlage des Gewächshauses dienen soll, so wirken während des Betriebes der Waschanlage häufig vergleichsweise große Zugkräfte auf die Schlauchleitung ein. Aufgrund der großen Abmessungen können sich hierbei Längenveränderungen der Schlauchleitung von beispielsweise mehr als 10 m, z.B. mehr als 15 m ergeben, welche die ordnungsgemäße Funktion der Schlauchleitung, beispielsweise während des Auf- und Abwickelns, beeinträchtigen. Ein ähnliches Problem existiert auch bei der Wasserversorgung von Bewässerungs-Robotern, die innerhalb des Gewächshauses über entsprechend lange Wegstrecken für eine Bewässerung der Bepflanzung des Gewächshauses sorgen müssen. Auch hier ist die durch Zugkräfte entstehende Verlängerung der Schlauchleitung aufgrund deren großer Gesamtlänge problematisch.

Vor diesem Hintergrund liegt der Erfindung die Aufgabe zugrunde, die ordnungsgemäße Funktion von langen Schlauchleitungen, welche in entsprechend langen Gewächshäusern zum Einsatz kommen, zu gewährleisten.

Erfindungsgemäß wird diese Aufgabe gelöst durch die Merkmale des Patentanspruchs 1. Die Erfindung beruht auf der Erkenntnis, dass durch Längsfäden in der Schlauchleitung, welche auch beim Einwirken großer Zugkräfte nur eine geringe Dehnung aufweisen, die Längsausdehnung der gesamten Schlauchleitung wirksam begrenzt werden kann, so dass auch bei einer sehr großen Länge Schlauchleitung deren einwandfreie Funktion gewährleistet ist.

Zweckmäßigerweise bestehen die Armierungslängsfäden aus Aramid, bzw. enthalten die Armierungslängsfäden zumindest Aramidfasern. Vorzugsweise sind die Armierungslängsfäden derart beschaffen, dass sie die Dehnung der Schlauchleitung durch Zugbelastung mindestens halbieren. Dies meint, dass bei einer ansonst identischen Schlauchleitung ohne Armierungslängsfäden die prozentuale Dehnung bei selber Zugbelastung mindestens doppelt so groß wäre wie bei der erfindungsgemäßen Lehre mit Armierungslängsfäden. So kann beispielsweise mithilfe der erfindungsgemäßen Lehre bei einer Länge der Schlauchleitung von beispielsweise 300 m deren Dehnung durch Zugkräfte im Betrieb von z.B. 10 - 15 m auf unter 5 m begrenzt werden. Hierdurch ist ein wesentlich einfacheres Auf- bzw. Abwickeln der Schlauchleitung auf/von eine/r Trommel möglich. Ferner kann auch die an die Schlauchleitung angeschlossene Apparatur (zum Beispiel Glasdach-Waschanlage oder Bewässerungs-Roboter) gezielter angesteuert bzw. positioniert werden, da die Längenausdehnung der Schlauchleitung eine deutlich geringere Rolle spielt. Die Armierungslängsfäden besitzen zweckmäßigerweise einen Durchmesser von 0,5 - 1,5 mm.

Die Armierungslängsfäden können in die Armierungsschicht eingeflochten sein. Im Rahmen der Erfindung liegt es aber auch, dass die Armierungslängsfäden innerhalb der Tragschicht oder an deren Außenseite angeordnet sind. Ferner liegt auch eine Anordnung der Armierungsfäden innerhalb der Außenschicht bzw. an deren Innenseite im Rahmen der Erfindung. Erfindungsgemäß sind die Armierungslängsfäden im Schlauchleitungsquerschnitt gesehen um 180° versetzt zueinander angeordnet. Ferner wird erfindungsgemäß - beispielsweise im auf eine Trommel aufgewickelten Zustand - die Schlauchleitung zumindest abschnittsweise in Längsrichtung gesehen gebogen und die Armierungslängsfäden befinden sich hierbei im Bereich der beiden Neutralwinkel, in denen durch diese Biegung weder eine Streckung noch eine Stauchung der Armierungslängsfäden erfolgt.

Die erfindungsgemäße Lehre kann - wie bereits erläutert - hinsichtlich des Gewächshauses für unterschiedliche Zwecke zur Anwendung kommen. So kann z.B. die Schlauchleitung als Zulaufleitung für eine Glasdach-Waschanlage des Gewächshauses dienen. Alternativ liegt es jedoch aber auch beispielsweise im Rahmen der Erfindung, dass die Schlauchleitung an einen Bewässerungsroboter angeschlossen ist, der zur Bewässerung von Pflanzen innerhalb des Gewächshauses dient.

Im Folgenden wird die Erfindung anhand einer lediglich ein Ausführungsbeispiel darstellenden Zeichnung ausführlich erläutert. Es zeigen schematisch:
- Fig. 1: eine Draufsicht auf ein Gewächshaus, bei dem die erfindungsgemäße Lehre zur Verwendung einer Schlauchleitung zum Einsatz kommt,
- Fig. 2: den durch eine gestrichelte Lupe in Fig. 1 angedeutete vergrößerte Ausschnitt der in Fig. 1 gezeigten Schlauchleitung in einer Seitenansicht,
- Fig. 3: den Schnitt A - A in Fig. 2 und
- Fig. 4: die Ansicht B in Fig. 1, die eine alternative Ausführungsform der Erfindung zeigt.

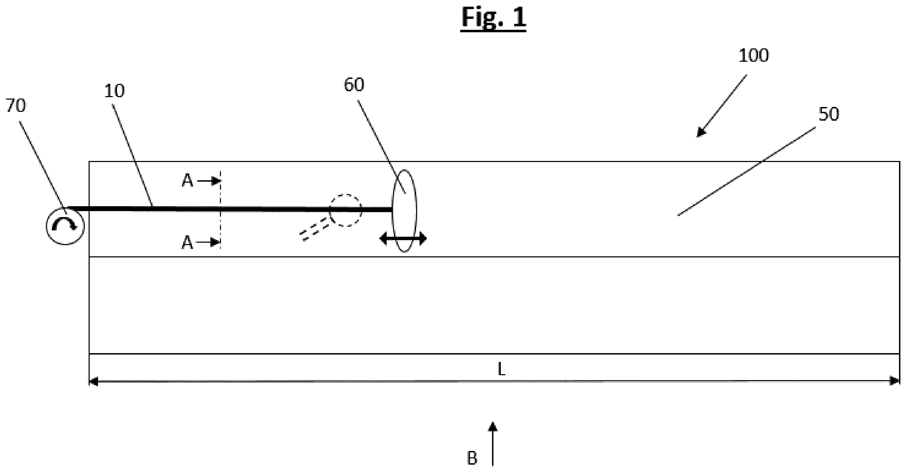

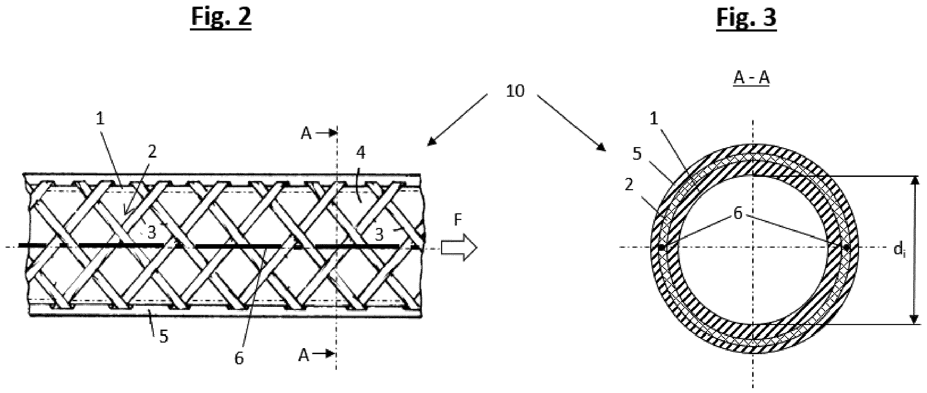

Die Figur 1 zeigt eine Draufsicht auf ein Gewächshaus 100. Das Gewächshaus 100 hat eine Längenausdehnung L von ca. 300 m. Auf dem Glasdach 50 des Gewächshauses 100 befindet sich eine Glasdach-Waschanlage 60 zur Reinigung des Daches 50 des Gewächshauses 100, welche entlang der gesamten Länge L des Gewächshauses 100 verfahrbar ist (gekennzeichnet durch Doppelpfeil). Das Glasdach 50 des Gewächshauses 100 kann aus Mineralglas oder aber auch beispielsweise aus einem durchsichtigen Kunststoff bestehen. Zur Wasserversorgung ist an die Glasdach-Waschanlage 60 eine auf eine motorisch angetriebene Trommel 70 aufwickelbare Schlauchleitung 10 angeschlossen, die zur Gewährleistung der Verfahrbarkeit der Glasdach-Waschanlage 60 entlang des Gewächshauses 100 von der Trommel 70 abgewickelt bzw. auf diese aufgewickelt wird und entsprechend eine Gesamtlänge von über 300 m aufweist. Die Schlauchleitung 10 ist über ihre gesamte Länge von mehr als 300 m hinweg frei von Kupplungselementen. Der Aufbau dieser Schlauchleitung 10 ist in den Figuren 2 und 3 näher dargestellt. Die einen Innendurchmesser dᵢ von 1 - 3 cm aufweisende Schlauchleitung 10 besitzt eine polymere Tragschicht 1, eine die Tragschicht 1 umgebende geflochtene Armierungsschicht 2 mit Armierungselementen 3, sowie eine die Armierungsschicht 2 umgebende Außenschicht 5, welche in Figur 2 aus Gründen der Veranschaulichung durchsichtig dargestellt ist. Den Figuren 2 und 3 ist ferner zu entnehmen, dass die Schlauchleitung 10 zusätzlich zur Armierungsschicht 2 in Schlauchleitungsrichtung verlaufende Armierungslängsfäden 6 aufweist, welche die axiale Dehnung der Schlauchleitung 10 durch Zugbelastung begrenzen. Im Ausführungsbeispiel bestehen diese Armierungslängsfäden 6 aus Aramid. Die Armierungslängsfäden 6 sind derart beschaffen, dass sie die Dehnung der Schlauchleitung 10 durch Zugbelastung mindestens halbieren. So kann im Ausführungsbeispiel bei einer Gesamtlänge der Schlauchleitung 10 von ca. 300 m deren Dehnung durch Zugkräfte im Betrieb von rund 10 - 15 m auf unter 5 m begrenzt werden.

Wie der Figur 2 zu entnehmen ist, sind die Armierungslängsfäden 6 in die hier offen gestaltete und somit entsprechend mit Freiräumen 4 versehene Armierungsschicht 2 eingeflochten. Alternativ können die Armierungsschicht 2, insbesondere bei Hochdruckanwendungen, auch geschlossen (d.h. ohne Freiräume) ausgebildet und die Armierungsfäden 6 in die geschlossene Armierungsschicht 2 eingeflochten sein. Im Rahmen der Erfindung liegt es aber auch, dass die Armierungslängsfäden 6 innerhalb der Tragschicht 1 oder an der Außenseite der Tragschicht 1, also zwischen Tragschicht 1 und Armierungsschicht 2 angeordnet sind. Ebenso können die Armierungsfäden 6 auch innerhalb der Außenschicht 5 oder an der Innenseite der Außenschicht 5 angeordnet sein. Anhand der Figur 3 ist ferner zu erkennen, dass die Armierungslängsfäden 6 im Schlauchleitungsquerschnitt gesehen um 180° versetzt zueinander angeordnet sind. Erfindungsgemäß wird - beispielsweise im auf die Trommel 70 aufgewickelten Zustand - die Schlauchleitung 10 zumindest abschnittsweise in Längsrichtung gesehen gebogen und hierbei befinden sich die Armierungslängsfäden 6 in den beiden Neutralwinkeln, in denen durch diese Biegung weder eine Streckung noch eine Stauchung der Armierungslängsfäden 6 hervorgerufen wird.

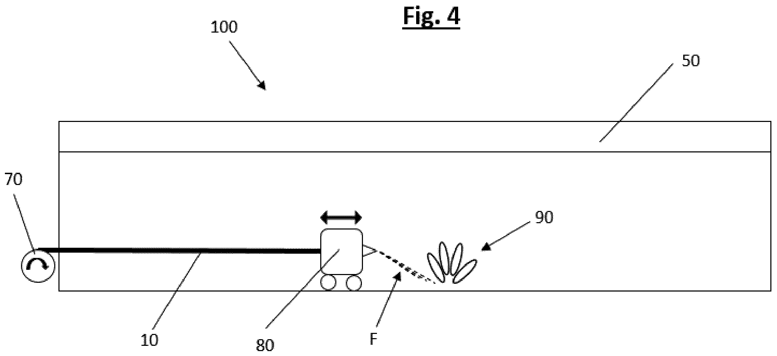

Alternativ zum Ausführungsbeispiel gemäß Figur 1 ist in Figur 4 die Schlauchleitung an einen Bewässerungsroboter 80 angeschlossen, der zur Bewässerung von Pflanzen 90 innerhalb des Gewächshauses dient. Der Aufbau der in Figur 4 gezeigten Schlauchleitung entspricht wiederum den Figuren 2 und 3.

## Patentansprüche

1. Verwendung einer flexiblen Schlauchleitung (10) zum Transport eines Fluides (F), insbesondere Wasser, zur Bewässerung und/oder Reinigung eines Gewächshauses (100), wobei die Schlauchleitung (10)
- eine polymere Tragschicht (1),
- eine die Tragschicht (1) umgebende gewickelte und/oder geflochtene Armierungsschicht (2),
- sowie optional eine die Armierungsschicht (2) umgebende Außenschicht (3) aufweist,
- wobei die Schlauchleitung (10) zusätzlich zur Armierungsschicht (2) in Schlauchleitungsrichtung verlaufende Armierungslängsfäden (6) aufweist, welche die axiale Dehnung der Schlauchleitung (10) durch Zugbelastung begrenzen,
**dadurch gekennzeichnet, dass**
- die Schlauchleitung (10) eine Mindestlänge von 250 Metern aufweist, die frei von Kupplungselementen ist, dass
- die Armierungslängsfäden (6) im Schlauchleitungsquerschnitt gesehen um 180° versetzt zueinander angeordnet sind, und dass
- die Schlauchleitung (10) zumindest abschnittsweise in Längsrichtung gesehen gebogen wird und sich die Armierungslängsfäden (6) hierbei im Bereich der beiden Neutralwinkel befinden, in denen durch diese Biegung weder eine Streckung noch eine Stauchung der Armierungslängsfäden (6) erfolgt.

2. Verwendung nach Anspruch 1, **dadurch gekennzeichnet, dass** die Armierungslängsfäden (6) aus Aramid bestehen.

3. Verwendung nach Anspruch 1 oder 2, **dadurch gekennzeichnet, dass** die Armierungslängsfäden (6) die Dehnung der Schlauchleitung (10) durch Zugbelastung mindestens halbieren.

4. Verwendung nach einem der Ansprüche 1 bis 3, **dadurch gekennzeichnet, dass** die Armierungslängsfäden (6) in die Armierungsschicht (2) eingeflochten sind.

5. Verwendung nach einem der Ansprüche 1 bis 3, **dadurch gekennzeichnet, dass** die Armierungslängsfäden (6) innerhalb der Tragschicht (1) oder an deren Außenseite angeordnet sind.

6. Verwendung nach einem der Ansprüche 1 bis 5, **dadurch gekennzeichnet, dass** die Schlauchleitung (10) als Zulaufleitung für eine Glasdach-Waschanlage (60) des Gewächshauses (100) dient.

7. Verwendung nach einem der Ansprüche 1 bis 6, **dadurch gekennzeichnet, dass** an die Schlauchleitung (10) ein Bewässerungsroboter (80) angeschlossen ist, der zur Bewässerung von Pflanzen (90) innerhalb des Gewächshauses (100) dient.

## Claims

1. Use of a flexible hose (10) for transporting a fluid (F), in particular water, for watering and/or cleaning a greenhouse (100), wherein the hose (10) comprises:
- a polymeric support layer (1),
- a wound and/or braided reinforcement layer (2) surrounding the support layer (1),
- and, optionally, an outer layer (3) surrounding the reinforcement layer (2),
- wherein the hose (10) comprises, in addition to the reinforcement layer (2), longitudinal reinforcement threads (6) extending in the direction of the hose, which limit the axial elongation of the hose (10) under tensile load,
**characterised in that**
- the pipe (10) has a minimum length of 250 metres, which is free of coupling elements, **in that**
- the longitudinal reinforcement threads (6) are arranged, viewed in the cross-section of the hose, offset from one another by 180°, and **in that**
- the hose (10), viewed in the longitudinal direction, is bent at least in sections and the longitudinal reinforcement threads (6) are located in the region of the two neutral angles, in which this bending neither stretches nor compresses the longitudinal reinforcement threads (6).

2. Use according to claim 1, **characterised in that** the longitudinal reinforcement threads (6) consist of aramid.

3. Use according to claim 1 or 2, **characterised in that** the longitudinal reinforcement threads (6) reduce the elongation of the hose (10) under tensile load by at least half.

4. Use according to any one of claims 1 to 3, **characterised in that** the longitudinal reinforcement threads (6) are braided into the reinforcement layer (2).

5. Use according to any one of claims 1 to 3, **characterised in that** the longitudinal reinforcement threads (6) are arranged on the inside of the support layer (1) or on its outside.

6. Use according to any one of claims 1 to 5, **characterised in that** the hose (10) serves as a supply line for a glass roof washing installation (60) of the greenhouse (100).

7. Use according to any one of claims 1 to 6, **characterised in that** a watering robot (80) is connected to the hose (10), which is used for watering plants (90) inside the greenhouse (100).

## Revendications

1. Utilisation d'un tuyau flexible (10) pour le transport d'un fluide (F), notamment d'eau, pour l'arrosage et/ou le nettoyage d'une serre (100), le tuyau (10) présentant :
- une couche de support polymère (1),
- une couche d'armature enroulée et/ou tressée (2) entourant la couche de support (1),
- et, en option, une couche extérieure (3) entourant la couche d'armature (2),
- le tuyau (10) présentant, en plus de la couche d'armature (2), des fils longitudinaux d'armature (6) s'étendant dans la direction du tuyau, qui limitent l'allongement axial du tuyau (10) par charge de traction,
**caractérisée en ce que**
- le tuyau (10) présente une longueur minimale de 250 mètres, qui est exempte d'éléments de couplage, **en ce que**
- les fils longitudinaux d'armature (6) sont disposés, vus dans la section transversale du tuyau, de manière décalée de 180° les uns par rapport aux autres, et **en ce que**
- le tuyau (10), vu dans la direction longitudinale, est fléchi au moins par sections et les fils longitudinaux d'armature (6) se trouvent dans la zone des deux angles neutres, dans lesquels cette flexion n'entraîne ni un étirement ni une compression des fils longitudinaux d'armature (6).

2. Utilisation selon la revendication 1, **caractérisée en ce que** les fils longitudinaux d'armature (6) sont constitués d'aramide.

3. Utilisation selon la revendication 1 ou 2, **caractérisée en ce que** les fils longitudinaux d'armature (6) réduisent au moins de moitié l'allongement du tuyau (10) par charge de traction.

4. Utilisation selon l'une quelconque des revendications 1 à 3, **caractérisée en ce que** les fils longitudinaux d'armature (6) sont tressés dans la couche d'armature (2).

5. Utilisation selon l'une quelconque des revendications 1 à 3, **caractérisée en ce que** les fils longitudinaux d'armature (6) sont disposés à l'intérieur de la couche de support (1) ou sur son côté extérieur.

6. Utilisation selon l'une quelconque des revendications 1 à 5, **caractérisée en ce que** le tuyau (10) sert de conduite d'alimentation pour une installation de lavage de toit en verre (60) de la serre (100).

7. Utilisation selon l'une quelconque des revendications 1 à 6, **caractérisée en ce qu'**un robot d'arrosage (80) est raccordé au tuyau (10), qui sert à l'arrosage de plantes (90) à l'intérieur de la serre (100).
